# EUROPEAN PATENT APPLICATION

(11) **EP 4 571 138 A1**
(43) Date of publication of application: **18.06.2025**
(21) Application number: 23217060.5
(22) Date of filing: 15.12.2023
(51) Int. Cl.: F16C 35/067

(54) **PIVOTABLE ELEMENT**

(71) Applicant: elobau GmbH & Co. KG, 88299 Leutkirch im Allgäu (DE)
(72) Inventor: Beckers, Ralf, 88410 Bad Wurzach (DE); Morent, Ulrich, 88299 Leutkirch (DE)
(74) Representative: Knöner, Gregor

(57) **Abstract**

A pivotable element (10, 11) is provided. The pivotable element (10, 11), comprises a bearing seat (12, 12a, 12b) having a cylindrical shape extending in an axial direction (A) and being configured to receive a bearing (30a, 30b) in the axial direction (A), wherein the bearing seat (12, 12a, 12b) comprises: an end stop face (14) configured to provide an end stop for the bearing (30a, 30b) in the axial direction (A), an inner circumferential face (16) configured to extend circumferentially about the bearing (30a, 30b) when the bearing is inserted in the bearing seat (12, 12a, 12b), and a plurality of rib elements (20) arranged on the inner circumferential face (16) and protruding inwardly from the inner circumferential face (16). The rib elements (20) extend towards the end stop face (14), wherein the rib elements (20) are configured to establish an interference fit with the bearing (30a, 30b) pressed into the bearing seat (12, 12a, 12b).

## Description

### FIELD OF THE INVENTION

The present application relates to a pivotable element, to a joystick comprising a pivotable element, and to a method of assembling a pivotable element.

### BACKGROUND

Bearings can be pressed into cylindrically shaped bearing seats provided in a component that is for example die cast. To provide the sizing of the seat with the required precision, the entire surface of the bearing seats must be reworked. For example, the support of a shaft requires at least two of these bearing seats, which must be aligned coaxially so that the bearings are also coaxial after being pressed into the bearing seats. This means that elaborate reworking of the bearing seats is required so that the bearing seats fulfil a narrow and predefined tolerance and thus ensure firm seating without deformation and correct positioning of the bearings.

### SUMMARY

Accordingly, there is a need to mitigate at least some of the drawbacks mentioned above and to provide a pivotable element that is easy to manufacture and enables a simple and precise assembly of a bearing.

This need is met by the features of the independent claims. The dependent claims describe embodiments of the invention.

According to an embodiment of the invention, a pivotable element is provided. The pivotable element comprises a bearing seat having a cylindrical shape extending in an axial direction and being configured to receive a bearing in the axial direction. The bearing seat comprises an end stop face configured to provide an end stop for the bearing in the axial direction, an inner circumferential face configured to extend circumferentially about the bearing when the bearing is inserted in the bearing seat, and a plurality of rib elements arranged on the inner circumferential face and protruding inwardly from the inner circumferential face. The rib elements extend towards the end stop face, wherein the rib elements are configured to establish an interference fit with the bearing when the bearing is pressed into the bearing seat.

The rib elements are used to center a bearing that is to be pressed into the bearing seat with respect to the inner circumferential face. Furthermore, the use of the rib elements eliminates the need for mechanical reworking of the bearing seat. Thus, both manufacturing costs and time can be saved.

Normally, with a cylindrical bearing seat, the entire inner surface of the cylinder has to be reworked, which is very time-consuming and cost-intensive. In contrast, by providing the rib elements, there is only contact between the rib elements and the bearing, in particular an outer ring of the bearing, after the bearing is pressed into the bearing seat. Thus, the contact surface between the bearing and the bearing seat is reduced. This means that the rib elements do not have to be manufactured as precisely as a fully circumferential surface, for example, and manufacturing tolerances can therefore be compensated by the rib elements. The ribs may in particular deform and/or form a chip of shaving when the bearing is pressed into the seat, so that a firm and precise seating of the bearing may be achieved while tolerances for the sizing of the ribs can be relaxed.

The end stop face may for example be an annular end stop face. Preferably, a central opening of the annular end stop face is adapted for feed-through of a shaft which is inserted through an inner ring of the bearing pressed into the bearing seat. Such annular end stop face may be coaxial with the inner circumferential face.

An insertion direction of the bearing is preferably parallel to the axial direction.

Inner faces of the rib elements may establish the interference fit with the bearing. Preferably the interference fit is a press fit. The bearing may be pressed into the bearing seat by means of a pressing tool.

The rib elements may extend radially inwards from the inner circumferential face. The rib elements may support the bearing in a radial direction.

Preferably, the bearing seat is configured such that, after the bearing has been pressed in the bearing seat, a rotation axis of the bearing is (substantially) concentric with the bearing seat.

After the bearing has been pressed in the bearing seat, the rib elements establish the interference fit with the bearing and there is no surface contact area between the bearing and the inner circumferential face of the bearing seat. Thus, the rib elements can compensate manufacturing tolerances or distortion of the bearing seat caused by heat-treatment of the pivotable element, such as for hardening. No reworking is necessary, and in particular not after a heat treatment of the bearing seat, which saves both costs and time.

The pivotable element may be made of a metal. Preferably, the pivotable element is manufactured by metal injection molding. For example, the manufactured pivotable element may be heat-treated, in particular hardened.

The pivotable element may be comprised in a joystick or may form part of a lever of such joystick, as described below. The pivotable element may be used in an operating element of any machine, in particular a vehicle, in which a lever of a joystick is to be mounted by means of a bearing. For example, the pivotable element may be used in an agricultural or construction vehicle, such as a tractor or harvester.

The pivotable element may for example be a pivotable lever element, a pivotable frame or bracket, e.g. a pivotable cardan frame of a cardan suspension of a joystick lever, or the like.

Preferably, the inner circumferential face extends (coaxially) from the end stop face to an axial end face of the bearing seat. The axial end face preferably forms an end of the bearing seat in the axial direction (i.e. an end of the portion of the pivotable element in which the bearing seat is provided). The axial end face may be arranged parallel to the end stop face. Preferably the distance between the end stop face and the axial end face corresponds to (or substantially to) a width of the bearing to be pressed into the bearing seat.

Such extension of the inner circumferential face from the end stop face allows the rib elements to extend over a greater length in the axial direction, which increases the effective bearing area of the interference fit established by the rib elements. This in turn may lead to an improved and more secure mounting of the bearing in the bearing seat of the pivotable element.

Preferably, the rib elements define an inner diameter which is smaller than a diameter of the inner circumferential face. The bearing is pressed in between the rib elements and due to the smaller inner diameter of the rib elements a gap may remain between the bearing and the inner circumferential face. Thus, there is no contact between the inner circumferential face and the bearing, but only between the rib elements and the bearing. Thus, reworking of the bearing seats is not necessary and manufacturing tolerances can be compensated due to the smaller diameter defined by the rib elements.

Preferably, the rib elements are distributed with an equal spacing along the circumference of the inner circumferential face. The equal spacing of the rib elements results in avoidance of a deformation of the bearing and may further provide an improved centering of the bearing in the bearing seat. In addition, the bearing may have a contact surface with the ribs at even distances after press-fitting, resulting in an improved press fit and better force transmission. In other examples, an uneven spacing may be used.

Preferably, the plurality of rib elements comprises at least 3, 5, 6, 7 or 8 rib elements. Any other number of rib elements may be chosen; the number of rib elements may depend on the particular application. Preferably, the plurality of rib elements may have an uneven number of rib elements. Due to the uneven number of rib elements, the individual rib elements are not arranged opposite to each other so that deformation of the bearing, when the bearing is pressed into the bearing seat, can be counteracted.

The rib elements may extend in a direction parallel to the axial direction and/ or the rib elements may extend from the (annular) end stop face to the axial end face of the bearing seat. Thus, the rib elements may extend over a greater length in the axial direction, which may increase the effective bearing area of the interference fit established by the rib elements. In other embodiment, the ribs may extend at an angle to the axial direction. This may increase the lengths of the ribs and thus the contact area.

Preferably, at least one, more preferably each, rib element comprises a (first) tapered part that is tapered in the direction towards the end stop face. Alternatively or additionally, at least one, preferably each, rib element comprises a (second) tapered part that is tapered in the direction away from the end stop face. In particular, a thickness of the rib element may be tapered, the thickness referring to the direction in which the rib element protrudes out of the inner circumferential face. A tapering of the rib element in a direction may mean that the thickness of the rib becomes smaller in this direction.

Preferably, at least one, more preferably each, rib element comprises a tapered part at the axial end face of the bearing seat that is tapered in the direction of the axial end face. In some embodiments, the tapered part at the axial end face defines the largest inner diameter of the bearing seat compared to the rest of the rib element. In other embodiments, the at least one rib element may have a part at the axial end face that is not tapered and that defines the largest inner diameter of the bearing seat.

Due to the tapered part of the rib elements at the end axial end face, the bearing can be inserted more easily into the bearing seat in the axial direction. This simplifies the assembly of the bearing in the bearing seat.

For example, the at least one rib element comprises a first section extending from the end stop face in the axial direction, and a second section extending from the first section towards the axial end face of the bearing seat in the axial direction, wherein the first section tapers in the direction of the axial end face and/or the second section tapers in the direction of the axial end face of the bearing seat. Alternatively, the first section tapers in the direction of the end stop face.

The rib element may have an intermediate section between the first and second section which defines the smallest inner diameter of the bearing seat. When the bearing is pressed in, the bearing is pressed over the intermediate section, causing plastic deformation of the rib element in the intermediate section.

Preferably, at least some, more preferably each, of the rib elements are configured such that, when the bearing is pressed into the bearing seat, at least a part of each of these rib elements is plastically deformed in such a way that a plastically deformed part of the rib elements at least partially bends over the inserted bearing and fixes the bearing in the axial direction.

Thus, by pressing in the bearing into the bearing seat, the rib elements establish the interference fit for the bearing and at the same time an axial securing of the bearing is created. No further working steps and no further components are necessary to produce the axial securing of the bearing. Thus, the manufacturing and assembly process is simplified, and the manufacturing time and costs are reduced.

The plastically deformed parts of the rib elements may fix the bearing in an axial direction opposite to the insertion direction of the bearing in the bearing seat.

Preferably, the part of the rib element which is plastically deformed when the bearing is pressed into the bearing seat is arranged at the axial end face of the bearing seat.

Preferably, the rib elements are configured such that, when the bearing is pressed into the bearing seat, a gap remains between adjacent rib elements and/or an outer ring of the bearing is only in contact with inner faces of the rib elements. I.e. there is a gap between the inner circumferential face of the bearing seat and the bearing (in particular an outer ring of the bearing).

Preferably, the end stop face is a continuous face, e.g. a continuous annular face, or comprises a plurality of recesses which are distributed circumferentially about the annular end stop face such that each recess is arranged in axial direction opposite to a rib element. In either case, the end stop face may be an annular end stop face, or may be a circular end stop face (for example if the bearing only supports a stub shaft that does not need to extend through the end stop face).

Chips may be formed when the bearing is pressed into the bearing seat. The chip can be taken up by the respective recess. This ensures correct positioning of the bearing in the bearing seat, in particular, that the bearing lies flat against the end stop face. Otherwise chips could accumulate between the bearing and the annular or circular end stop face, which would result in the bearing not lying flat against the end stop face so that the bearing is not correctly pressed in the bearing seat.

In other embodiments, the end stop face may be provided as one, two, or more end stops (e.g. annular sections) that protrude inwardly from the inner circumferential face.

Preferably, the bearing seat is a first bearing seat and the pivotable element further comprises a second bearing seat which is arranged coaxially to the first bearing seat.

The first and second bearing seats may extend in opposite axial directions so that the insertion directions of the bearings of the first and second bearing seats are opposite to each other. Preferably, the axial end faces of the first and second bearing seat face away from each other and/or the end stop faces of the first and second bearing seats face away from each other.

The second bearing seat may have a similar configuration as the first bearing seat. I.e. the configurations described herein for the bearing seat are applicable for the first and the second bearing seats.

During assembly, a shaft is preferably pushed through the first and second bearing seats and then first and second bearings are pushed onto the shaft from opposing sides thereof and pressed into the first and second bearing seats. This ensures that the first and second bearings are aligned coaxially to each other after being pressed into the bearing seats. Thus, a smooth pivotability of the pivotable element is ensured.

Since the rib elements provide the interference fits of the first and second bearing seats, it is allowed that the first and second bearings are not concentric to the inner circumferential faces after the first and second bearings are pressed into the bearing seats. Due to the rib elements, manufacturing tolerances of these inner circumferential faces can be compensated and the bearing seats do not need to be reworked.

According to a further embodiment of the present invention, a joystick is provided. The joystick comprises a control lever comprising a pivotable element having any of the configurations described herein, and a bearing pressed into the bearing seat, wherein by means of the bearing, the control lever is pivotable around a rotation axis of the bearing. The pivotable element may for example be provided as a pivotable lever element that forms part of the control lever or as a pivotable frame or bracket that pivotably supports the control lever.

Preferably, the bearing seat, and in particular the inner circumferential face and the (annular) end stop face of the bearing seat, is/are (substantially) concentric with the rotation axis of the bearing pressed into the bearing seat. However, since the rib elements provide the interference fit, it is also possible that the bearing is not fully concentric to the inner circumferential face of the bearing seat, an respective deviations can be compensated by the ribs.

In case the pivotable element comprises the first and second bearing seats, a first bearing is pressed into the first bearing seat and a second bearing is pressed into the second bearing seat. Preferably, the first bearing seat is concentric with the second bearing seat.

Preferably, by pressing the bearing into the bearing seat, at least some, preferably each, of the rib elements are plastically deformed in such a way that a plastically deformed part of the rib elements at least partially bends over the inserted bearing and fixes the bearing in the axial direction. More preferably, the plastically deformed part of each deformed rib element bends over an outer ring of the bearing.

According to a further embodiment of the present invention, a method of assembling a pivotable element having any of the configurations described herein is provided. The method comprises providing a pivotable element, e.g. a pivotable lever element, as described herein, and pressing a bearing in the axial direction between the rib elements into the bearing seat, wherein the rib elements establish an interference fit with the bearing pressed into the bearing seat.

The method may further comprise, during or after pressing of the bearing into the bearing seat, plastically deforming at least some, preferably each, of the rib elements in such a way that a deformed part of the rib elements at least partially bends over the bearing and fixes the bearing in an axial direction (e.g. in a direction opposite to the insertion direction of the bearing into the bearing seat). Preferably, the plastically deforming of the rib elements is caused by a pressing tool which generates a force in the axial direction for pressing the bearing into the bearing seat. The diameter of the pressing tool is preferably larger than the inner diameter defined by the rib elements and smaller than the inner diameter defined by the inner circumferential face.

Preferably, the method steps of pressing the bearing into the bearing seat and plastically deforming the rib elements are carried out simultaneously in one assembly step by the same pressing tool. Thus, the assembly process is simplified and time for assembly can be reduced.

Preferably, before pressing the bearing, the method may comprise inserting a shaft through an opening of the pivotable element and placing the first and second bearings on opposing sides of the shaft. Then, the above pressing may be carried out by pressing the first and second bearing into the first and second bearing seats. In this way, it can be ensured that the bearings are correctly aligned and are coaxial with each other such that a smooth pivoting of the pivotable element is possible. In other embodiments, the pivotable element may be arranged on a support that comprises a respective shaft onto which one bearing is positioned and pressed into the respective bearing seat. One bearing may thus be mounted at a time.

The method may comprise any steps of assembly of a pivotable element or a joystick having any of the configurations described herein. Further, the pivotable element and the joystick may have a configuration resulting from any of the assembly methods disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a perspective view of a pivotable lever element according to an embodiment.
Fig. 2 is a schematic drawing showing a side view of the pivotable lever element of Fig. 1.
Fig. 3 is a schematic drawing showing a side view of a pivotable lever element according to a further embodiment.
Fig. 4 is a schematic drawing showing a perspective view of a rib element of the pivotable lever element of Fig. 3.
Fig. 5 is a schematic drawing showing a side sectional view of a joystick according to an embodiment.
Fig. 6 is a schematic drawing showing an enlarged side sectional view of the bearing seat in the joystick of Fig. 5.
Fig. 7 is a schematic drawing showing an enlarged view of a bearing pressed into a bearing seat according to an embodiment.
Fig. 8 is a flow diagram illustrating a method of assembling a pivotable lever element according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as openended terms (i.e., meaning "including, but not limited to,") unless otherwise noted.

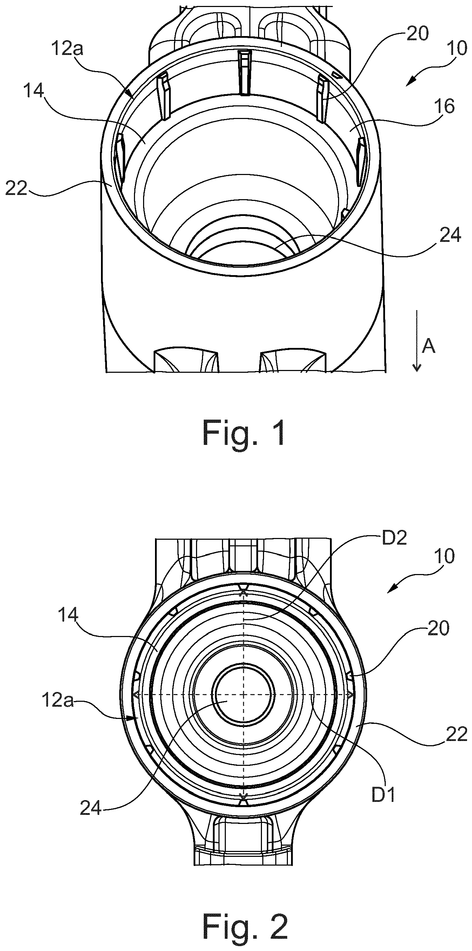

Fig. 1 shows a schematic drawing showing a perspective view of a pivotable lever element 10 according to an embodiment and Fig. 2 is a schematic drawing showing a side view of the pivotable lever element of Fig. 1.

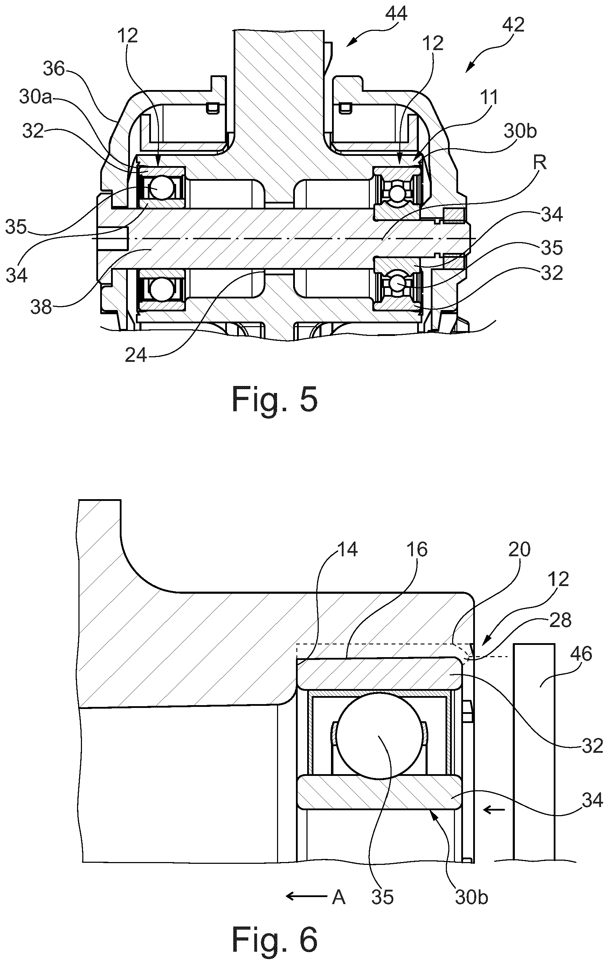

The pivotable lever element 10 comprises a bearing seat 12a which has a cylindrical shape and which extends in an axial direction A. The bearing seat 12a is configured to receive a bearing (see Fig. 5) in the axial direction A. The bearing seat 12a comprises an annular end stop face 14 configured to provide an end stop for a bearing in the axial direction A, and an inner circumferential face 16 configured to extend circumferentially about the bearing when the bearing is inserted in the bearing seat 12a. The axial direction A is (substantially) parallel to a central symmetry axis (cylinder axis) of the inner circumferential face 16.

As shown in Fig. 1, the inner circumferential face 16 preferably extends from the annular end stop face 14 to an axial end face 22 of the bearing seat and is coaxial with these. The axial end face 22 is preferably parallel to the annular end stop face 14. As shown in Figs. 1 and 2, the annular end stop face 14 may be a continuous annular face.

The bearing seat 12a further comprises a plurality of rib elements 20 which are arranged on the inner circumferential face 16 and protrude inwardly from the inner circumferential face 16. The rib elements 20 extend towards the annular end stop face 14, wherein the rib elements 20 are configured to establish an interference fit with the bearing pressed into the bearing seat 12a.

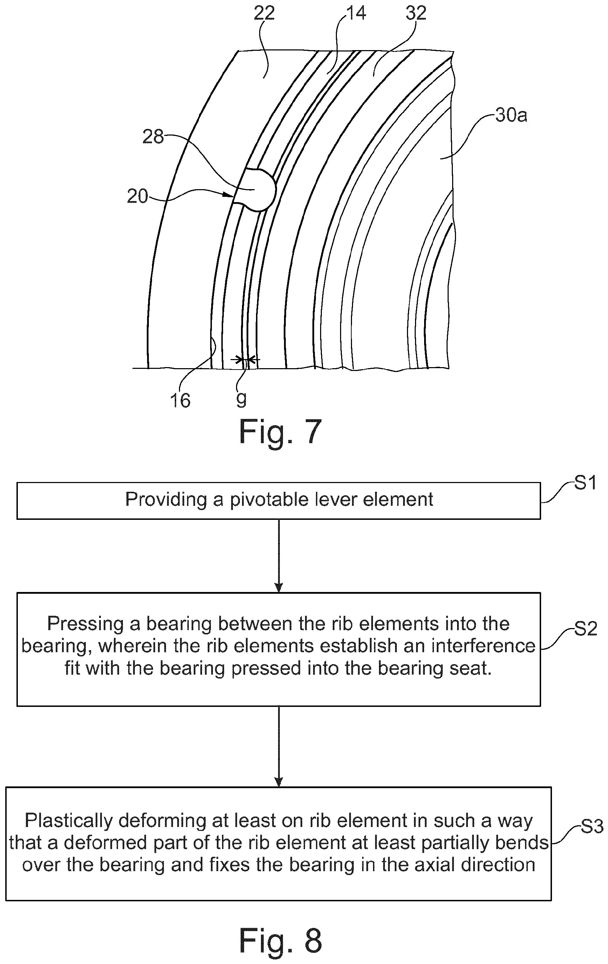

In particular, when the bearing is pressed into the bearing seat 12a, there is only contact between the rib elements 20 and the bearing, in particular an outer ring of the bearing (see Fig. 7). Thus, the contact surface between the bearing and the bearing seat 12a is reduced so that the rib elements 20 do not have to be manufactured as precisely as a circumferential surface that contacts the outer ring of such bearing over its full circumference, for example. Manufacturing tolerances can therefore be compensated by the rib elements.

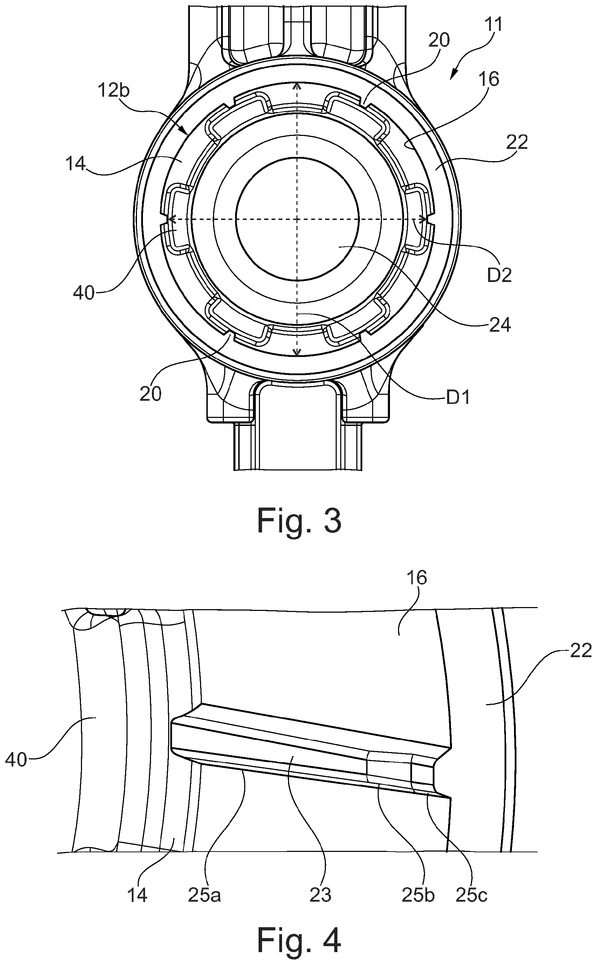

As shown in Fig. 2, the rib elements 20 preferably define an inner diameter D2 which is smaller than an inner diameter D1 defined by the inner circumferential face 16. The rib elements 20 can be distributed with an equal spacing along circumference of the inner circumferential face 16. For example, the rib elements 20 comprise eight rib elements as shown in Fig. 2 or six rib elements as shown in Fig. 3. However, any other number of rib elements may be possible. Preferably, the number of rib elements 20 corresponds to an uneven number, whereby forces acting in two opposing directions on the bearing may be prevented, thus reducing the risk of deformation of the bearing. In Fig. 2, the axial direction A is perpendicular to the drawing plane.

Further, and as shown in Figs. 1 and 2, the rib elements 20 may extend in a direction parallel to the axial direction A. The rib elements 20 may extend from the annular end stop face 14 to (or substantially) to the axial end face 22 of the bearing seat 12a.

Each of the rib elements 20 is preferably configured such that, when the bearing (see Figs. 5 to 7) is pressed into the bearing seat 12a, at least a part of each rib element is plastically deformed in such a way that a plastically deformed part 28 (see Figs. 6 and 7) of the rib elements 20 at least partially bends over the inserted bearing and fixes the bearing in the axial direction A. In particular, the deformation of the rib elements 20 is caused by a pressing tool 46 (see Fig. 6) which generates a force in the axial direction for pressing the bearing into the bearing seat 12a. The pressing tool 46 may have an outer diameter between diameters D1 and D2.

The pivotable lever element 10 may further comprise an opening 24 configured to receive a shaft 38 (see Fig. 5), wherein the opening 24 is preferably arranged coaxially to the inner circumferential face 16.

Fig. 3 is a schematic drawing showing a side view of a pivotable lever element 11 according to an embodiment. The pivotable lever element 11 is similar to the pivotable lever element 10 shown in Figs. 1 and 2, but the pivotable lever element 11 is a modification of the pivotable lever element 10. In the following, only the differences of the pivotable lever element 11 are described. All other features described with respect to the embodiment of Figs. 1 and 2 are also applicable to the embodiment shown in Fig. 3.

The pivotable lever element 11 comprises a bearing seat 12b which differs from the bearing seat 12a of Figs. 1 and 2. In particular, in contrast to the embodiment shown in Figs. 1 and 2, the annular end stop face 14 is not a continuous face, but comprises a plurality of recesses 40 which are distributed circumferentially about the annular end stop face 14 such that each recess 40 is arranged in axial direction A opposite to a rib element 20. Thus, chips which may be formed by scraping off material from the rib elements 20 when the bearing is pressed into the bearing seat can be collected in the recesses 40. Thus, the chips can be prevented from collecting between the bearing and the annular end stop face 14, which would prevent the bearing from lying flat against the annular end stop face 14 .

Further, the geometry of the rib elements 20 of Fig. 3 is different from that of the rib elements shown in Figs. 1 and 2. However, it should be clear that the geometric design of the rib elements in the figures are only examples. The rib elements 20 can also have different geometries.

Fig. 4 is a schematic drawing showing a perspective view of one of the rib elements 20 of the pivotable lever element 11 of Fig. 3.

The rib element 20 may comprise different sections, wherein inner faces 23 of the sections define different inner diameters of the bearing seat. The rib element 20 may comprise a tapered section which is tapered in the direction of the annular end stop face 14 and/or a tapered section which is tapered in the direction of the axial end face 14. The thickness of the rib elements (i.e. in a direction extending from the inner circumferential face) is in particular tapered.

As shown in Fig. 4, the rib element 20 may comprise a first section 25a extending from the annular end stop face 14 in axial direction towards the end face 22, a second section 25b, and a third section 25c extending to the axial end face 22. As shown in Fig. 4, the first section 25a may be tapered in the direction of the axial end face 22, but it may also be flat (i.e. not tapered). Alternatively, the first section 25a may be tapered in the direction of the annular end stop face 14. The second section 25b may be tapered in the direction of the axial end face 22. Preferably, the third section 25c at the axial end face 22 is tapered in the direction of the axial end face 22, but it may also be flat (not tapered, as shown in Fig. 4). Thus, it is easier to insert the bearing into the bearing seat 12b.

As shown in the figures, the rib elements 20 within the respective embodiment of Figs. 1 to 4 are designed identically. However, it should be clear that the rib elements 20 of a bearing seat can also be designed differently along the circumference of the circumferential face 16.

Further, besides a tapering in thickness direction, at least one or each rib element may comprise a tapering in width direction (e.g., a direction tangential to circumferential surface 16). One or more sections, such as section 25a, may be tapered from the annular end stop face 14 towards the axial end face 22.

Fig. 5 shows a schematic drawing showing a side sectional view of a joystick 42 according to an embodiment. The joystick 42 comprises a control lever 44 which comprises the pivotable lever element 11, a first bearing 30a and a second bearing 30b.

The pivotable lever element 11 preferably comprises a first bearing seat and a second bearing seat 12 both configured in correspondence to the bearing seat 12a shown in Figs. 1 and 2 or the bearing seat 12b shown in Figs. 3 and 4, wherein the first and second bearing seats 12 are arranged coaxially to each other.

The axial end faces 22 of the first and second bearing seats 12 face away from each other (the annular end stop faces 14 of the first and second bearing seats 12 also face away from each other). As shown in Fig. 5, the bearings 30a, 30b are pressed into the respective bearing seats 12 from opposing directions (with respect to Fig. 5 the first bearing 30a is inserted from a left side and the second bearing 30b from a right side of the pivotable lever element 11).

Each of the bearings 30a, 30b comprises an outer ring 32, an inner ring 34 and rolling elements 35 movably arranged between the outer and inner rings 32, 34. The first and second bearings 30a, 30b are pressed into the first and second bearing seats. By means of the bearings 30a, 30b, the control lever 44 is pivotable around a rotation axis R of the bearings. The bearings 30a, 30b are supported by the shaft 38 which is inserted through the inner rings 34 of the bearings and the opening 24. The rotation axis R of the bearings may be concentric with the bearing seats 12.

A housing 36 may be provided which supports the shaft 38 and/or the pivotable lever element 11. The bearing seats 12 are preferably enclosed by the housing 36. Preferably, the joystick 42 is gimballed. In particular, the housing 36 may correspond to a cardan frame that is pivotable around an axis which is perpendicular or substantially perpendicular to the rotation axis R of the shaft 38. In this case, the control lever 44 is pivotable in two directions which are perpendicular to each other. In other embodiments, the lever may be pivotable about only one rotation axis, and the housing may correspond to a housing of the joystick.

As shown in Fig. 6, by pressing the bearings 30a, 30b into the respective bearing seats 12, at least some, preferably each, of the rib elements 20 are plastically deformed in such a way that the plastically deformed part 28 (indicated with dashed line, see also Fig. 7) of the rib elements 20 at least partially bends over the inserted bearing 30a, 30b, in particular over the outer ring 32 of the bearing, and fixes the bearing in the axial direction A.

In particular, the pressing tool 46 may be used for pressing the bearing 30b into the respective bearing seat 12. The pressing tool 46 may be configured such that the bearing is pressed into the bearing seat 12 and the rib elements 20 are deformed as described above such that the bearing is fixed in the axial direction A. Thus the bearing 30b can be pressed into the bearing seat 12 and an axial securing of the bearing can be achieved in a single manufacturing step using the pressing tool 46.

In Figs. 5 and 6, the pivotable lever element 11 of Figs. 3 and 4 with a first and second bearing seat 12b is shown. However, it should be clear that instead of the pivotable lever element 11 also the pivotable lever element 10 which is shown in Figs. 1 and 2 with a first and second bearing seat 12a can be used.

Fig. 7 is a schematic drawing showing an enlarged view of a bearing 30a, 30b pressed into a bearing seat 12. The rib elements 20 may be configured such that when the bearing 30a, 30b is pressed into the bearing seat 12, a gap g between the outer ring of the bearing and the circumferential surface remains between adjacent rib elements 20. I.e. the outer ring 32 of the bearing is preferably only in contact with inner faces 23 of the rib elements 20. Thus, manufacturing tolerances can be compensated by the rib elements 20. When the bearing is 30a, 30b is pressed into the bearing seat 12, a part of the rib element 20 may be deformed so that the deformed part of the rib element bends over the bearing 30a, 30b and fixes the bearing in an axial direction as shown in Fig. 7.

Fig. 8 shows a flow diagram illustrating a method of assembling a pivotable lever element according to an embodiment. The pivotable lever element may have any of the configurations described herein. Method step S1 of the method comprises providing a pivotable lever element 10, 11 as described herein, and step S2 pressing a bearing 30a, 30b between the rib elements 20 into the bearing seat 12a, 12b, wherein the rib elements 20 establish an interference fit with the bearing 30a, 30b pressed into the bearing seat 12a, 12b.

Optionally, the method may further comprise a method step S3 comprising, during or after pressing of the bearing into the bearing seat, plastically deforming at least some, preferably each, of the rib elements 20 in such a way that the deformed part 28 of the rib elements at least partially bends over the bearing 30a, 30b and fixes the bearing in an axial direction (i.e. in a direction opposite to the insertion direction of the bearing into the bearing seat). Preferably, the method steps of pressing and plastically deforming are carried out with one pressing tool, namely the pressing tool 46 as shown in Fig. 6. Thus, the assembly process is simplified and time for assembly can be reduced.

Preferably, and as shown in Fig. 5, the pivotable lever element is supported by two bearings and thus comprises a first and second bearing seat. When the first bearing 30a is pressed into the first bearing seat of the pivotable lever element 10, 11 according to the above method steps, the second bearing 30b can be mounted in the second bearing seat in the same way.

Preferably, before method step S2 ("pressing of bearing"), the method may comprise a method step of inserting the shaft 38 through the opening 24 of the pivotable lever element 10, 11, and placing the bearings 30a, 30b on opposing sides of the shaft. Then, according to the above method step S2, the bearings can be pressed into the first and second bearing seats. In this way, it can be ensured that the bearings 30a, 30b are correctly aligned and are coaxial with each other such that a smooth pivoting of the pivotable lever element 10, 11 is possible.

Although the above embodiments are described with respect to a pivotable lever element, it should be clear that the teachings described herein apply correspondingly to other types of pivotable elements, in particular to any pivotable element comprised in a joystick. As an example, the pivotable element may be part of a cardan suspension by which a control lever of a joystick is suspended, such as a cardan frame or bracket, which may for example be pivotably supported in a housing of a joystick. The teachings may also be used in other fields of technology in which a pivotable element comprising a respective bearing seat provides advantages. Also, the end stop face does not need to be annular, but may have any shape suitable for the respective application, such as a circular shape if no shaft extends through the end stop face, or such as comprising only few annular segments.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs:

- 10, 11: pivotable lever element
- 12, 12a, 12b: bearing seat
- 14: annular end stop face
- 16: inner circumferential face
- 20: rib element
- 22: axial end face
- 23: inner face of rib element
- 24: opening for receiving a shaft
- 25a-c: first / second / third part of rib element
- 28: deformed part of rib element
- 30a, 30b: first / second bearing
- 32: outer ring of bearing
- 34: inner ring of bearing
- 35: rolling element
- 36: housing
- 38: shaft
- 40: recess of annular end stop face
- 42: joystick
- 44: control lever
- 46: pressing tool
- g: gap between rib elements
- D 1: inner diameter of inner circumferential face
- D2: inner diameter of rib elements
- A: axial direction of bearing seat
- R: rotation axis of bearing
- S1-S3: method step

## Claims

1. Pivotable element (10, 11), comprising
- a bearing seat (12, 12a, 12b) having a cylindrical shape extending in an axial direction (A) and being configured to receive a bearing (30a, 30b) in the axial direction (A),
wherein the bearing seat (12, 12a, 12b) comprises:
- an end stop face (14) configured to provide an end stop for the bearing (30a, 30b) in the axial direction (A),
- an inner circumferential face (16) configured to extend circumferentially about the bearing (30a, 30b) when the bearing is inserted in the bearing seat (12, 12a, 12b), and
- a plurality of rib elements (20) arranged on the inner circumferential face (16) and protruding inwardly from the inner circumferential face (16),
wherein the rib elements (20) extend towards the end stop face (14), and wherein the rib elements (20) are configured to establish an interference fit with the bearing (30a, 30b) when the bearing is pressed into the bearing seat (12, 12a, 12b).

2. Pivotable element according to claim 1, wherein the inner circumferential face (16) extends, preferably coaxially, from the end stop face (14) to an axial end face (22) of the bearing seat.

3. Pivotable element according to claim 1 or 2, wherein the rib elements (20) define an inner diameter (D2) which is smaller than a diameter (D1) of the inner circumferential face (16).

4. Pivotable element according to claim 1, 2 or 3, wherein the rib elements (20) are distributed with an equal spacing along the circumference of the inner circumferential face (16).

5. Pivotable element according to any of the preceding claims, wherein the plurality of rib elements (20) comprises at least 3, 5, 6, 7 or 8 rib elements.

6. Pivotable element according to any of the preceding claims, wherein the rib elements (20) extend in a direction parallel to the axial direction (A) and/or the rib elements (20) extend from the end stop face (14) and preferably to an axial end face (22) of the bearing seat.

7. Pivotable element according to any of the preceding claims, wherein at least one, preferably each, rib element (20) comprises a tapered part of tapering thickness that is tapered in the direction towards the end stop face (14) and/or a tapered part (25a, 25b) that is tapered in a direction away from the end stop face (14).

8. Pivotable element according to any of the preceding claims, wherein at least one, preferably each, rib element (20) comprises a tapered part at an axial end face (22) of the bearing seat a thickness of which is tapered in the direction of the axial end face.

9. Pivotable element according to any of the preceding claims, wherein at least some, preferably each, of the rib elements (20) are configured such that, when the bearing (30a, 30b) is pressed into the bearing seat (12, 12a, 12b), at least a part of each rib element (20) is plastically deformed in such a way that a plastically deformed part (28) of the rib elements at least partially bends over the inserted bearing and fixes the bearing in the axial direction (A).

10. Pivotable element according to any of the preceding claims, wherein the rib elements (20) are configured such that, when the bearing (30a, 30b) is pressed into the bearing seat, a gap (d) remains between adjacent rib elements (20) and/or an outer ring (32) of the bearing is only in contact with inner faces (23) of the rib elements (20).

11. Pivotable element according to any of the preceding claims, wherein the end stop face (14) is a continuous face or is a face that comprises a plurality of recesses (40) which are distributed circumferentially about the end stop face (14) such that each recess (40) is arranged in axial direction (A) opposite to a rib element (20), wherein the end stop face is preferably an annular end stop face or a circular end stop face.

12. Pivotable element according to any of the preceding claims, wherein the bearing seat (12, 12a, 12b) is a first bearing seat and wherein the pivotable element (10, 11) further comprises a second bearing seat which is arranged coaxially to the first bearing seat.

13. Joystick (42) comprising:
- a control lever (44) which comprises the pivotable element (10, 11) according to any of the preceding claims, and
- a bearing (30a, 30b) pressed into the bearing seat (12a, 12b),
wherein, by means of the bearing (30a, 30b), the control lever (44) is pivotable around a rotation axis (R) of the bearing.

14. Joystick according to claim 13, wherein, by pressing the bearing (30a, 30b) into the bearing seat (12a, 12b), at least some, preferably each, of the rib elements (20) are plastically deformed in such a way that a plastically deformed part (28) of the rib elements at least partially bends over the inserted bearing (30a, 30b), in particular over an outer ring (32) of the bearing, and fixes the bearing in the axial direction (A).

15. A method of assembling a pivotable element (10, 11) according to any of the preceding claims, wherein the method comprises:
- providing a pivotable element (10, 11) according to any claims 1-12, and
- pressing a bearing (30a, 30b) between the rib elements (20) into the bearing seat (12a, 12b), wherein the rib elements (20) establish an interference fit with the bearing (30a, 30b) when the bearing is pressed into the bearing seat (12a, 12b).
